# EUROPEAN PATENT APPLICATION

(11) **EP 1 070 770 A2**
(43) Date of publication of application: **24.01.2001**
(21) Application number: 00500158.1
(22) Date of filing: 19.07.2000
(51) Int. Cl.: C25C 1/12, C25C 7/02, B22D 19/00

(54) **Recycling of used anodes in the electrolytic refining of metals**

(30) Priority: 21.07.1999 CL 163999
(71) Applicant: Aghemio Rodriguez, Luis Alberto, Santiago de Chile (CL)
(72) Inventor: Aghemio Rodriguez, Luis Alberto, Santiago de Chile (CL)
(74) Representative: Isern Jara, Jaime

(57) **Abstract**

A procedure in recovering of anodes for the electrolytic refining process of copper, rich metals or other metals, substantiously based on directly reusing of exhausted mother anodes in the foundry of new metal anodes, omitting the stage of foundry of said anode residues. Such exhausted mother anode is placed direcly into foundry mold and fillled with liquid metal untill fullfilling of said mold and completes the new piece. Piercing, cuts, breaks or folds may be made on mother anode prior to placing same in the mold. The liquid metal is being poured directly onto the anode residues or exhausted mother inside the mold. This procedure saves considerably energy and raw material because exhausted mother anode and anode residues re-used in it are not melted before making the new anode. In addition, this procedure enlarges anodes mold life, avoiding exhaustion at internal mold surfaces by pouring liquid metal process.

## Description

### BACKGROUND OF THE INVENTION

Any copper company having an electrolytic refining plant generates copper matter called anode residues. These anode residues were initially mother anodes that were a part of the electrolytic refining process with an approximate weight of 280 kilograms each. Mother anodes, after the electrolytic refining process yield highly pure copper cathodes, and unprocessed anode residues are left.

In fact, in the electrolysis process, exhaustion of the mother anodes located in the electrolytic vats occurs, producing copper for electro-setting into a cathode. The anode residues are pieces the weights of which vary between 20 and 60 kilograms once they have been extracted from the electrolytic vats, and they are placed again in the former process (fire refining), that is, they are placed in furnaces for melting and subsequent use as raw material for the manufacture of mother anodes.

However, a large percentage of these anode residue pieces remain in good condition in the upper part, as they remain outside the level of the electrolyte (unsheltered) without undergoing major exhaustion. Likewise, the lower part of the anode residues only undergoes minor thinning.

The stage of the process consisting of the re-melting the anode residues brings about high costs in energy, transport, human resources, sublimation (loss of copper through evaporation), exhaustion of the mother anode molds, among other costs.

### DESCRIPTION OF THE FIGURES

Figure N° 1 shows a perspective view of a new unexhausted copper mother anode (1).

Figure N° 2 shows a perspective view of an exhausted copper mother anode residue (2) extracted from the electrolytic vats.

Figure N° 3 shows a perspective view of the upper part (3) of the anode residue which has bee pierced.

Figure N° 4 shows a perspective view of a foundry mold (4) for producing copper mother anodes.

Figure N° 5 shows a perspective view of a piece of exhausted copper mother anode (2) being deposited in the foundry mold (5).

Figure N° 6 shows a perspective view of a mold (4) containing the upper part of a residue of a cut copper mother anode (3) with holding punctures which is being filled with liquid copper metal (5).

Figure N° 7 shows a perspective view of the residue of a copper mother anode (2) placed in the foundry mold (4) which is being filled with liquid copper metal (5).

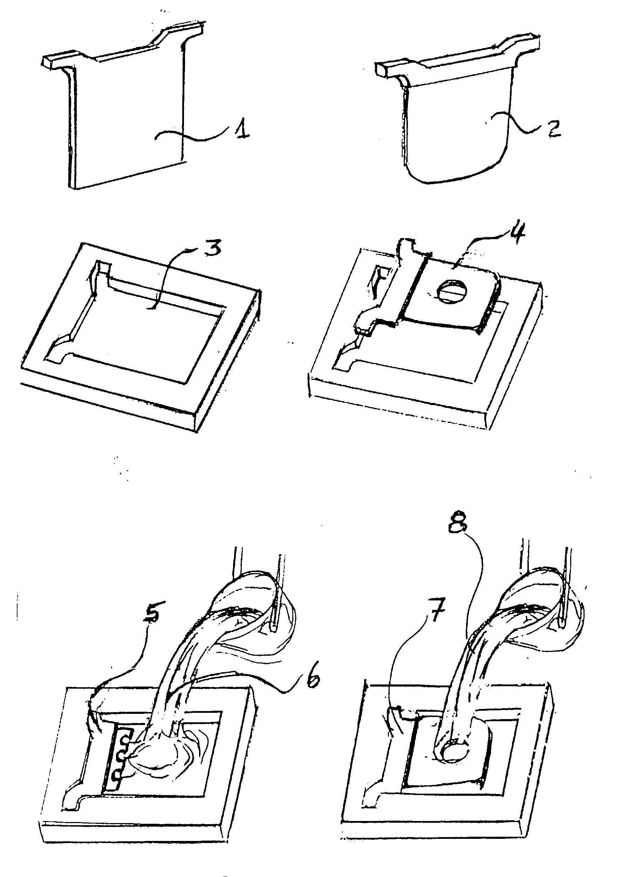

### DESCRIPTION OF THE NEW METHOD

To save costs and increase productivity in the copper, rich metal and other rich metal foundries, we propose a new productive process which eliminates the re-melting stage of the exhausted residues of mother anodes.

This way, the process comprises the re-use, without melting, of the residue of the copper mother anode by either using all of it (2) or only its upper part (3). The residue of the anode was pierced, cut, broken into pieces or folded. Then the residues of the cathodes were placed in the cavity of the foundry mold (4) in order to have the liquid copper metal poured (5) on top of the same mold (4) containing a residue of copper (2) or only the upper part of the anode (3). This way, the rest of the anode, either the cut sheet (3) or the entire sheet (2), with punctures, folds or broken into pieces under or over relief or any geometrical shape or methods of grasping on to the new poured metal will be melted. The metal will preferably fill the spaces left due to the exhaustion and will cover the entire mold.

The piercing, cuts, breaking or folds are intended to have the metal drip through the spaces of the exhaustion of the mother anode and/or through the piercing, cuts or breaks made to it, with which a faster manufacture of a mother anode and a better adherence between the new metal and the metal of the copper anode residue is attained.

As a consequence of this process, each partial melt, will cause savings in metal as compared to the traditional process. In fact, if we consider that the anode residue has between 10% and 20% of the metal of the mother anode, we may determine that the new procedure will demand less metal for the, manufacture for the manufacture of each mother anode, and also it shall render the costly stage of re-melting of the copper anode residue unnecessary.

This way, the recovery of the (not re-melted) anode residue increases the productivity of the entire process, without causing the melting costs whatsoever.

On the other hand, the fact that the life of the production molds (4) is increased is also highlighted as an advantage of this process. In fact, the life of each mold (4) is determined by the frequency of filling. The exhaustion of the mold (4) is caused by the fall of the liquid metal (5) when poured. With the traditional process, it is necessary to replace the mold every 2 or 3 weeks. With the new process, the poured metal (5) does not fall directly in the mold, but falls on the residue of the copper anode (2), thus the residue of the copper anode acts as a protective element for the mold. This protection awards the mold with an additional 4 to 6 weeks of life.

## Claims

1. A procedure in recovering of anodes for the electrolytic refining process of copper, rich metals or other metals wherein the residue of exhausted copper mother anode extracted from the electrolytic vats is placed in the foundry mold for the subsequent pouring of the liquid metal, forming a new mother anode, thus omitting the stage of foundry of the anode residues.

2. A procedure in recovering of anodes for the electrolytic refining process of copper, rich metals or other metals as per claim N° 1, wherein the entire residue or the upper part of the anode may be re-used.

3. A procedure in recovering of anodes for the electrolytic refining process of copper, rich metals or other metals as per claim N° 1, wherein piercing, cuts, breaks or folds may be made on the copper anode residues prior to placing same in the mold.

4. A procedure in recovering of anodes for the electrolytic refining process of copper, rich metals or other metals as per claim N° 1, wherein it is eliminated the stage of foundry the residues of the mother anode.
